# EUROPEAN PATENT APPLICATION

(11) **EP 4 401 286 A1**
(43) Date of publication of application: **17.07.2024**
(21) Application number: 23220610.2
(22) Date of filing: 28.12.2023
(51) Int. Cl.: H02K 1/276, H02K 15/03

(54) **ROTOR CORE, ROTOR, AND MANUFACTURING METHOD OF ROTOR CORE**

(30) Priority: 12.01.2023 JP 2023003033
(71) Applicant: TOYOTA JIDOSHA KABUSHIKI KAISHA, Toyota-shi, Aichi-ken, 471-8571 (JP)
(72) Inventor: MIYAZONO, Hideaki, Toyota-shi 471-8571 (JP); KATO, Hiroki, Toyota-shi 471-8571 (JP); ASAOKA, Hironori, Toyota-shi 471-8571 (JP); YOKOYAMA, Kiichi, Toyota-shi 471-8571 (JP); YAMATO, Fumiaki, Toyota-shi 471-8571 (JP)
(74) Representative: D Young & Co LLP

(57) **Abstract**

A rotor core (2) is provided. The rotor core (2) includes a first electromagnetic steel plate (16), and a second electromagnetic steel plate (18) laminated in an axial direction of the rotor core (2) alongside the first electromagnetic steel plate (16), where the second electromagnetic steel plate (18) has a plurality of protrusion portions (20) each extending toward a magnet (10) to be fixed, and each of the protrusion portions (20) has a tip portion (26) extending toward an opposite side of the magnet (10).

## Description

### BACKGROUND OF THE INVENTION

### 1. Field of the Invention

The present disclosure relates to a rotor core, a rotor, and a manufacturing method of the rotor core.

### 2. Description of Related Art

There is a rotor that accommodates a magnet in a slot, which is a space provided in a rotor core. In this type of rotor, the magnet is fixed by an elastic force due to bending of a protrusion portion protruding into the magnet slot (WO 2015/091075).

### SUMMARY OF THE INVENTION

However, in this type of rotor, the magnet is inserted into the magnet slot so as to bend the protrusion portion. Therefore, contact between the magnet and the protrusion portion may damage the magnet.

The present disclosure provides a rotor core, a rotor, and a manufacturing method of the rotor core that can suppress or prevent the occurrence of scratches on a magnet when the magnet is attached.

A first aspect of the present disclosure relates to a rotor core including a first electromagnetic steel plate, and a second electromagnetic steel plate. The second electromagnetic steel plate is laminated in an axial direction of the rotor core alongside the first electromagnetic steel plate. The second electromagnetic steel plate has a plurality of protrusion portions each extending toward a magnet to be fixed. The protrusion portions each have a tip portion extending toward an opposite side of the magnet. In the present disclosure, when a direction approaching a central axis of the magnet along a rotor core axis direction is defined as a first direction D1, and a direction opposite to the first direction and away from the central axis is defined as a second direction D2, this second direction is referred to as the opposite side of the magnet. The tip portions extending toward the opposite side of the magnet may move away from the magnet.

In the first aspect, the protrusion portions may have an abutment portion that bends along one side in the axial direction and has a curved surface capable of abutting against the magnet, and the tip portions may include a portion extending from the abutment portion toward the opposite side of the magnet. According to such a protrusion portion, even when the abutment portion is attached to the magnet, it is possible to prevent or suppress scratches on the magnet or its surface.

In the first aspect, the protrusion portions may have an extension portion extending from the second electromagnetic steel plate toward the magnet so as to be substantially perpendicular to the axial direction. This configuration enhances the holding force on the magnet.

In the first aspect, the tip portion may be folded to face the laminated first electromagnetic steel plate and/or the second electromagnetic steel plate with a gap in-between. This helps maintain the electromagnetic characteristics of the rotor core without degradation.

The rotor core according to the first aspect may further include a magnet slot extending in the axial direction.

In the first aspect, the magnet slot may include a through hole through which an elongated cross-section of the magnet can be arranged along a circumferential direction of the rotor core, and the protrusion portions may have an extension portion in the magnet slot that extends from the second electromagnetic steel plate toward a long end surface of the magnet on an inner side of the rotor core in the radial direction so as to be substantially perpendicular to the axial direction.

In the configuration described above, the rotor core has the protrusion portions extending toward the magnet, and these protrusion portion each have, in advance, the tip portion extending toward the opposite side of the magnet. The tip portions of the protrusion portions are provided so as to move away from the magnet and does not extend toward the magnet. Therefore, when the magnet is attached to a magnet accommodation portion of the rotor core, contact between the tip portions of the protrusion portions and the magnet or its surface is prevented or suppressed. As a result, damage to the magnet is prevented or suppressed.

In addition, since each protrusion portion has the tip portion extending to the side opposite to the magnet in advance, the elastic force generated on the magnet is likely to be exerted as intended. In addition, a decrease in the elastic force is less likely to occur. Therefore, the magnet can be stably fixed in the magnet slot.

A second aspect of the present disclosure relates to a rotor including a rotor core, and a magnet fixed to the rotor core. The rotor core includes a first electromagnetic steel plate and a second electromagnetic steel plate laminated alongside the first electromagnetic steel plate in an axial direction of the rotor core, and the second electromagnetic steel plate has a plurality of protrusion portions extending toward a magnet in a fixed state, and each protrusion portion has a tip portion extending toward a side opposite to the magnet.

With the configuration described above, since the occurrence of scratches on the magnet or its surfaces is prevented or suppressed, the rotor can exhibit the intended electromagnetic characteristics. Further, since the protrusion portions have a form for fixing the magnet in advance, and the magnet can be stably fixed, the rotor can exhibit the intended electromagnetic characteristics.

A third aspect of the present disclosure relates to a manufacturing method of a rotor core where the rotor core includes a first electromagnetic steel plate and a second electromagnetic steel plate laminated together with the first electromagnetic steel plate in an axial direction of the rotor core, and the second electromagnetic steel plate has a plurality of protrusion portions extending toward a magnet to be fixed. The method includes the steps of preparing the first electromagnetic steel plate by punching, preparing the second electromagnetic steel plate having the protrusion portions by punching, bending and deforming the protrusion portions to each have a tip portion extending toward an opposite side of the magnet, and laminating the first electromagnetic steel plate and the second electromagnetic steel plate.

With the configuration described above, the second electromagnetic steel plate including the protrusion portions each having a predetermined tip portion is prepared in advance by punching, and the protrusion portions are bent and deformed so as to have the tip portions extending toward the side opposite to the magnet, and then the first electromagnetic steel plate and the second electromagnetic steel plate are laminated. By doing so, it is possible to manufacture the rotor core in which damage to the magnet or its surface is prevented or suppressed when fixing the magnet to the magnet slot.

With each aspect of the present disclosure, it is possible to suppress or prevent the occurrence of scratches on the magnet when attaching the magnet.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a plan view of a rotor core disclosed in the present specification, viewed from one side in an axial direction;
FIG. 2 is a plan view of a rotor obtained by fixing a magnet to the rotor core illustrated in FIG. 1, viewed from one side in the axial direction of the rotor core;
FIG. 3 is a partially enlarged view of the rotor core illustrated in FIG. 1. The magnet is illustrated with an imaginary line;
FIG. 4A is a cross-sectional view along the axial direction illustrating a state in which the magnet is inserted into a magnet slot of the rotor core illustrated in FIG. 1, and is a view schematically illustrating the state using the IV-IV line section of FIG. 3;
FIG. 4B is a cross-sectional view along the axial direction illustrating a state after the magnet is fixed in the magnet slot of the rotor core illustrated in FIG. 1, and is a view schematically illustrating the state using the IV-IV line section of FIG. 3;
FIG. 5 is a view illustrating another embodiment of a protrusion portion of the rotor core; and
FIG. 6 is a view illustrating a process of bending and deforming an electromagnetic steel plate to form the protrusion portion.

### DETAILED DESCRIPTION OF EMBODIMENTS

Hereinafter, an embodiment of a rotor core disclosed in the present specification will be described with reference to the drawings as appropriate. In addition, in the present specification, the term "radial direction" means a radial direction of the rotor core, the term "circumferential direction" means a circumferential direction of the rotor core, and the term "axial direction" means an axial direction of the rotor core.

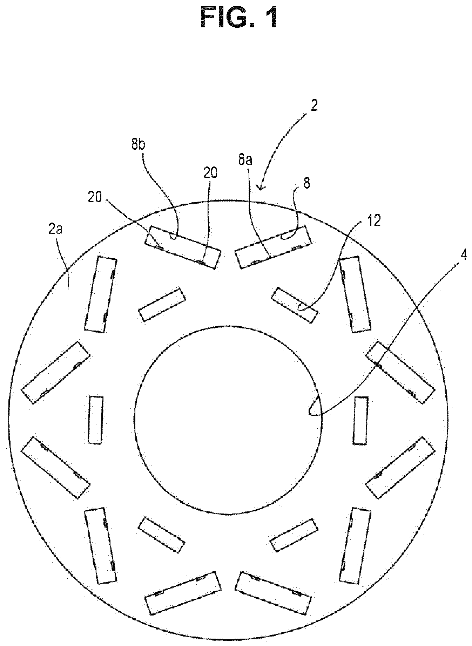

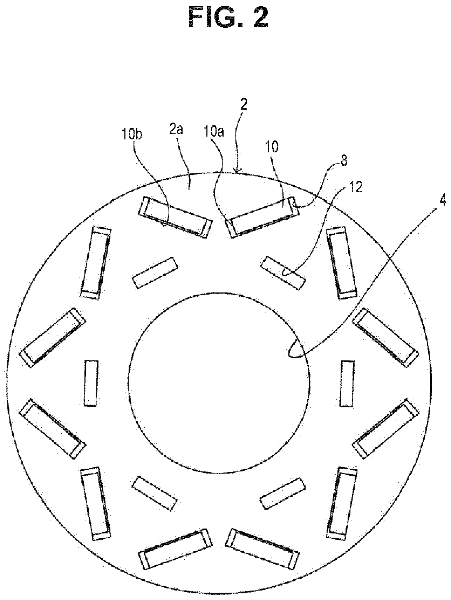

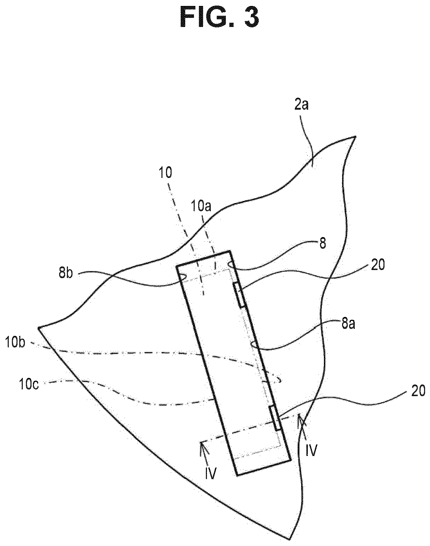

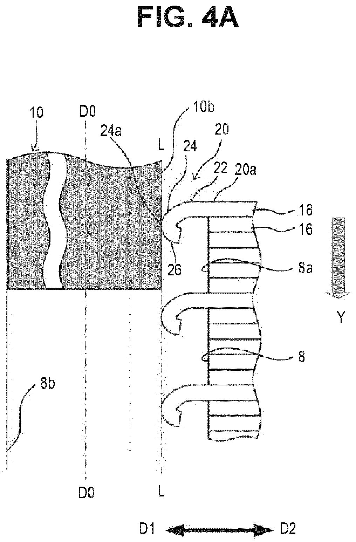

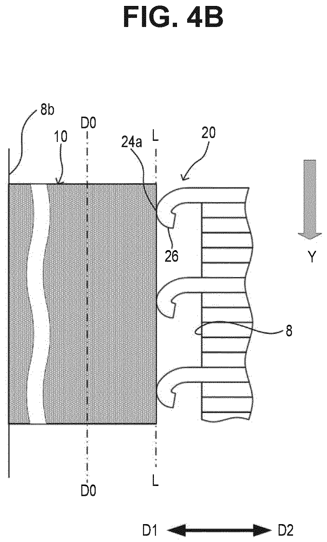

FIGS. 1 and 2 are plan views of the rotor core before and after magnets are attached respectively, as viewed from one side in the axial direction, FIG. 3 illustrates an enlarged view near a magnet slot, and FIGS. 4A and 4B schematically illustrate cross sections taken along the line IV-IV along an axial direction of the magnet slot.

In the present specification, the rotor core is a component of a rotor, and the rotor constitutes a motor together with a stator. Although not particularly limited, the motor is, for example, a motor generator that functions as an electric motor or a generator. For example, by itself or together with an internal combustion engine, the motor generator can constitute a drive source for a vehicle or the like.

FIG. 1 illustrates a rotor core 2 before the magnets are attached, and FIG. 2 illustrates the rotor core 2 after magnets 10 is attached. The rotor core 2 has a central hole 4 for attaching a shaft (not illustrated) and is configured to be rotatable alongside the shaft. Further, an end surface 2a in the axial direction of the rotor core 2 illustrated in FIGS. 1 and 2 and the other end surface may be clamped by end plates or the like (not illustrated).

As illustrated in FIGS. 1 and 2, on an outer peripheral side of the rotor core 2, the rotor core 2 has a plurality of magnet slots 8 that axially penetrate it along a circumferential direction. Each magnet slot 8 accommodates the magnet 10. An arrangement pattern of the magnet slots 8 in the rotor core 2 is appropriately determined according to the shape and arrangement pattern of the magnets 10. The magnet 10 will be further described below.

As illustrated in FIG. 3, an inner surface of the rotor core 2 forming each of the magnet slots 8 is provided with a protrusion portion 20 for fixing the magnet 10. One or more protrusion portions 20 are provided for one magnet 10, usually more than one. The protrusion portion 20 extends from an inner surface (hereinafter simply referred to as an inner-side inner surface) 8a on an inner side of the magnet slot 8 in the radial direction toward the magnet 10 to be fixed. In other words, the protrusion portion 20 extends from the inner-side inner surface 8a toward an opposing inner surface (hereinafter simply referred to as an outer-side inner surface) 8b on an outer side in the radial direction of the magnet slot 8. The protrusion portions 20 are also formed at predetermined intervals along the axial direction. The protrusion portion 20 will be further described below.

As illustrated in FIGS. 1 and 2, the rotor core 2 has a coolant flow path 12 further inside in the radial direction than the magnet slot 8. A suitable number of coolant flow paths 12, for example, six, are provided along a circumferential direction. A coolant supplied through the shaft is supplied to the coolant flow path 12. The coolant is supplied, for example, through a flow path formed between the end plate (not illustrated) and the end surface of the rotor core 2 in the axial direction or through a flow path passing through the inside of the shaft.

The rotor core 2 is composed of a laminated steel plate 14 in which electromagnetic steel plates made of a magnetic material such as iron or an iron alloy are laminated in the axial direction. The laminated steel plate 14 has a planar shape so as to form the magnet slots 8, the coolant flow path 12, and the like. The laminated steel plate 14 is configured by laminating two types of electromagnetic steel plates 16, 18 having different planar shapes. The electromagnetic steel plate 16 is an electromagnetic steel plate that does not have the protrusion portion 20 for fixing the magnet 10 around the magnet slot 8, and the electromagnetic steel plate 18 is an electromagnetic steel plate that has the protrusion portion 20 around the magnet slot 8. A plurality of the electromagnetic steel plates 16 are usually laminated, and the electromagnetic steel plates 18 are also laminated one for each group of the plurality of the electromagnetic steel plates 16, and usually a plurality of the electromagnetic steel plates 18 are laminated. The electromagnetic steel plates 16, 18 are respectively examples of a first electromagnetic steel plate and a second electromagnetic steel plate disclosed in the present specification.

Next, the magnet 10 to be fixed to the magnet slot 8 and the protrusion portion 20 for fixing the magnet 10 will be further described. The material and form of the magnet 10 are not particularly limited, and known materials and forms of magnets can be used as appropriate. For example, as illustrated in FIGS. 2 and 3, the magnet 10 with a prism shape that extends in the axial direction and having an elongated cross-section can be used.

The arrangement pattern of the magnets 10 in the rotor core 2 is not particularly limited, and various known embodiments can be used. For example, as illustrated in FIG. 2, two magnets 10 each having an elongated cross section extending in the circumferential direction of the rotor core 2 may be paired and arranged to form one pole. The pair of magnets 10 are arranged, for example, so that the apex of the substantially V shape is arranged on the center side of the rotor core 2. That is, short end surfaces 10a of the magnets 10 facing each other are arranged so as to be symmetrically inclined inward in the radial direction.

As illustrated in FIGS. 2 and 3, the magnet 10 is arranged such that an inner-side long end surface (hereinafter simply referred to as an inner-side long end surface) 10b of the magnet 10 faces the inner-side inner surface 8a of the magnet slot 8 with a predetermined gap in-between. A long end surface (hereinafter referred to as an outer-side long end surface) 10c on the outer side of the magnet 10 in the radial direction is arranged so as to be close to or abut on the outer-side inner surface 8b of the magnet slot 8.

As illustrated in FIG. 4A, the protrusion portion 20 is formed in the electromagnetic steel plate 18 that is laminated every predetermined number of the electromagnetic steel plates 16. The protrusion portion 20 as a whole has a folding structure such that it extends toward the magnet 10, comes into contact with the magnet 10 to be fixed, and then veers away from the magnet 10. The electromagnetic steel plate 18 generally includes a plurality of protrusion portions 20. For example, for each magnet 10 provided on the electromagnetic steel plate 18, one or more, or one to three, protrusion portion 20 is provided.

As illustrated in FIG. 4A, the protrusion portion 20 extends from the inner-side inner surface 8a of the magnet slot 8 toward the inner-side long end surface 10b of the magnet 10 to be fixed. The protrusion portion 20 also has an extension portion 22 extending from an extension base portion 20a of the protrusion portion 20 so as to substantially maintain a laminating position of the electromagnetic steel plate 18. That is, the extension portion 22 extends substantially perpendicular to the axial direction. The extension base portion 20a is an end edge of the electromagnetic steel plate 18 that defines the magnet slot 8 and is a base end of the protrusion portion 20.

The protrusion portion 20 further has an abutment portion 24 curved in the axial direction near the inner-side long end surface 10b beyond the extension portion 22. The abutment portion 24 is curved along an insertion direction Y of the magnet 10, as illustrated in FIG. 4A. The abutment portion 24 has a curved surface 24a capable of abutting against the inner-side long end surface 10b. More specifically, the abutment portion 24 is curved in a substantially circular arc shape along the axial direction, and the curved surface 24a at the vertex of the curved portion is in contact with the inner-side long end surface 10b.

As illustrated in FIG. 4A, the protrusion portion 20 has a tip portion 26 that extends beyond the abutment portion 24 toward an opposite side of the magnet 10. When viewing the cross-sectional view of the magnet 10 along the axial direction, when a direction approaching a central axis D0 of the magnet 10 is set to a first direction D1, a second direction D2 opposite to the first direction D1 is the "opposite side". That is, the direction away from the central axis D0 of the magnet is the second direction D2. The first direction D1 and the second direction D2 may extend in the radial direction or may extend in the circumferential direction.

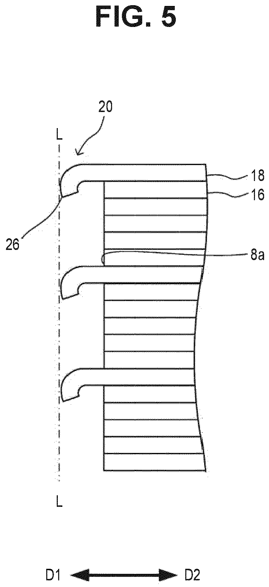

The direction of the tip portion 26 is not limited to folding back toward the inner-side inner surface 8a so as to be perpendicular to the axial direction. For example, it may be formed away from the magnet 10 as illustrated in FIGS. 4A and 5. In other words, the tip portion 26 should be positioned closer to the inside (inner-side inner surface 8a) than a fixed line L of the magnet 10.

Although the length of the tip portion 26 in a folded shape is not particularly limited, it may be preferable that the tip portion 26 is folded so as to face the laminated steel plate 14 with a gap in-between. The tip of the tip portion 26 faces either one or both of the electromagnetic steel plates 16, 18 of the laminated steel plate 14 with a gap in-between. This is because if the tip of the tip portion 26 in the folded shape reaches and comes into contact with the rotor core 2, the electromagnetic characteristics may deteriorate. The gap formed between the tip portion 26 and the laminated steel plate 14 is preferably set within a range such that the tip portion 26 does not come into contact with the laminated steel plate 14 when the magnet 10 is inserted and/or it is used as the rotor core 2.

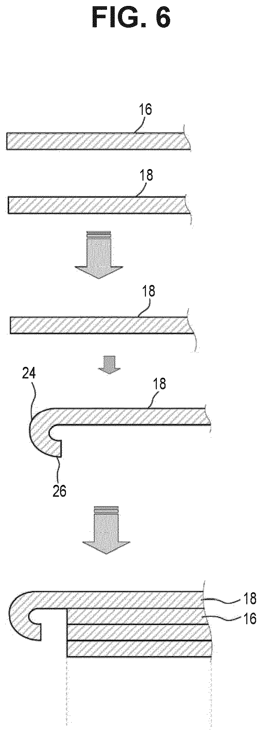

Such a rotor core 2 can be manufactured, for example, as follows. First, as illustrated in the upper part of FIG. 6, the electromagnetic steel plate 16 having a predetermined planar shape for forming the central hole 4, the magnet slot 8, the coolant flow path 12, and the like is prepared by punching. Similarly, as illustrated in the upper part of FIG. 6, the electromagnetic steel plate 18 having a predetermined planar shape including a planned portion that will become the protrusion portion 20 is prepared by punching. Forming the electromagnetic steel plates 16, 18 by punching can be carried out as appropriate by those skilled in the art.

Next, as illustrated in the middle part of FIG. 6, the protrusion portion 20 is formed in the electromagnetic steel plate 18 by bending and deforming the planned portion of the electromagnetic steel plate 18 so as to have the abutment portion 24 and the tip portion 26. A well-known technique can be suitably adopted for the bending deformation process. When the punching process and the bending deformation process can be performed substantially at the same time, they may be performed collectively or continuously to obtain the electromagnetic steel plate 18 having the protrusion portion 20.

Next, as illustrated in the lower part of FIG. 6, the rotor core 2 made of the laminated steel plate 14 can be manufactured by laminating and fixing the electromagnetic steel plates 16 and 18 in a predetermined lamination form.

Next, the effect of attaching and fixing the magnet 10 to the rotor core 2 will be described. To attach the magnet 10 to the rotor core 2, the magnet 10 is inserted into the magnet slot 8 along the insertion direction Y, as illustrated in FIG. 4A. When inserting the magnet 10 along the fixed line L of the magnet 10 in the magnet slot 8, the curved surfaces 24a of the protrusion portions 20 are arranged in advance along the fixed line L, so the magnet 10 can be easily positioned when inserted. In addition, since the curved surface 24a with an arc shape is mainly in contact with the tip of the magnet 10, it is possible to suppress or prevent damage to the magnet 10 at the start of insertion.

Further, even when the magnet 10 is inserted into the magnet slot 8, the surface of the magnet 10 continues to be mainly in contact with the curved surface 24a having an arc shape. Therefore, scratching due to contact between the magnet 10 and the surface of the magnet 10 with the tip portion 26 is reduced or prevented. In particular, contact of a punched peripheral edge of the electromagnetic steel plate 18, such as the tip portion 26, is prevented, thereby preventing scratches.

As illustrated in FIG. 4B, after inserting the magnet 10 to a predetermined position in the magnet slot 8 and completing the insertion, the magnet 10 is pressed and fixed against the outer-side inner surface 8b of the magnet slot 8 by the protrusion portions 20 formed inside the magnet slot 8. Since the protrusion portion 20 has a shape for fixing the magnet 10 by bending deformation in advance, the shape is maintained before and after fixing the magnet 10. Therefore, the protrusion portion 20 abuts against the magnet 10 with an intended elastic force and presses the magnet 10 against the outer-side inner surface 8b.

The protrusion portion 20 has the folded structure with the abutment portion 24 with a curved shape. Therefore, the magnet 10 is fixed in the magnet slot 8 by a stable elastic force pressing the magnet 10 against the outer-side inner surface 8b. Further, since the protrusion portion 20 can apply an intended elastic force in advance and is bent and deformed, it is not easily affected by an external force, and a decrease in the elastic force can be suppressed. Therefore, it is possible to suppress a decrease in the holding force for the magnet 10 and maintain a stable fixed state.

With the embodiment described above, the protrusion portion 20 has the extension portion 22 extending toward the magnet 10 perpendicularly to the axial direction, such that the holding force for the magnet 10 is easily maintained.

With the above-described embodiment, the protrusion portion 20 has the abutment portion 24 folded arcuately, and the tip portion 26 faces an opposite side of the magnet 10 and extends toward the inner-side inner surface 8a of the magnet slot 8. Therefore, damage to the magnet 10 is more reliably suppressed or prevented, and a decrease in the holding force for the magnet 10 is also suppressed.

With the above embodiment, a rotor with the magnet 10 fixed to the rotor core 2 is also provided. According to this rotor, damage to the magnet 10 is suppressed or prevented, and the fixing force for the magnet 10 is stably maintained, so that the rotor has excellent electromagnetic performance. Further, according to the above embodiments, a motor including the rotor is also provided.

According to the above embodiment, a manufacturing method of the rotor core 2 is also provided. With this manufacturing method, the planned portion that will become the protrusion portion 20 is provided in the electromagnetic steel plate 18 forming the rotor core 2, and the planned portion is bent and deformed to form the protrusion portion 20, and then the electromagnetic steel plates 16 and 18 are laminated. Therefore, it is possible to easily suppress or prevent damage to the magnet 10 and obtain the rotor core 2 having excellent holding power for the magnet 10. In addition, according to the above embodiment, a manufacturing method of the rotor is also provided, which further includes a step of attaching the magnet 10 to the obtained rotor core 2.

In the above embodiment, all the electromagnetic steel plates 16 provided in the rotor core 2 have the protrusion portions 20 having the tip portions 26. However, one or a plurality of electromagnetic steel plates 16 having such a protrusion portion 20 may be provided. Further, it is not necessary to provide a fixed form by means of such protrusion portions 20 for all magnets 10 fixed to the rotor core 2, and it suffices that one or a plurality of magnets 10 have a fixed form by means of the protrusion portions 20.

In the above embodiment, a so-called magnet-embedded rotor core is exemplified as having the magnet slot 8 penetrating the rotor core 2, but the present invention is not limited to this. The magnet slots 8 may be concave inwardly in the radial direction from the outer circumferential edge of a rotor core, such as a so-called spoke-type rotor core. Also, it may be a combination of through magnet slots and concave magnet slots.

In the above embodiment, the protrusion portion 20 extends from the inner-side inner surface 8a of the magnet slot 8 toward the magnet 10. However, the protrusion portion 20 is not limited to this, and can be determined as appropriate according to the form of the magnet slot 8 and the arrangement of the magnets 10.

In the above embodiment, the protrusion portion 20 has the substantially arc-shaped abutment portion 24, but is not limited to this. The abutment portion 24 can take various forms such as a triangular shape and a circular shape with respect to the magnet 10 as long as the abutment portion 24 can abut against the magnet 10 with a curved surface. Also, in the above embodiment, the tip portion 26 has the folded structure facing the opposite side of the magnet 10. However, it is not limited to this, and various configurations in which the tip portion 26 is spaced from the magnet 10 are possible.

The present specification includes the following items based on the above description.
[1] A rotor core including:
   a first electromagnetic steel plate; and
   a second electromagnetic steel plate laminated in an axial direction of the rotor core alongside the first electromagnetic steel plate, wherein:
      the second electromagnetic steel plate has a plurality of protrusion portions each extending toward a magnet to be fixed; and
      each protrusion portion has a tip portion extending toward an opposite side of the magnet.
[2] The rotor core according to [1], wherein:
   the protrusion portion has an abutment portion that bends along one side in the axial direction and has a curved surface capable of abutting against the magnet; and
   the tip portion includes a portion extending from the abutment portion toward the opposite side of the magnet.
[3] The rotor core according to [1] or [2], wherein the protrusion portion has an extension portion extending from the second electromagnetic steel plate toward the magnet so as to be substantially perpendicular to the axial direction.
[4] The rotor core according to any one of [1] to [3], wherein the tip portion is folded to face the laminated first electromagnetic steel plate and/or the second electromagnetic steel plate with a gap in-between.
[5] The rotor core according to any one of [1] to [4] further including a magnet slot extending in the axial direction.
[6] The rotor core according to [5], wherein:
   the magnet slot includes a through hole through which an elongated cross-section of the magnet can be arranged along a circumferential direction of the rotor core; and
   the protrusion portion has an extension portion in the magnet slot that extends from the second electromagnetic steel plate toward a long end surface of the magnet on an inner side of the rotor core in the radial direction so as to be substantially perpendicular to the axial direction.
[7] A rotor including:
   a rotor core; and
   a magnet fixed to the rotor core, wherein:
      the rotor core includes a first electromagnetic steel plate and a second electromagnetic steel plate laminated alongside the first electromagnetic steel plate in an axial direction of the rotor core; and
      the second electromagnetic steel plate has a plurality of protrusion portions each extending toward a magnet in a fixed state, and the protrusion portion has a tip portion extending toward a side opposite to the magnet.
[8] A manufacturing method of a rotor core where the rotor core includes a first electromagnetic steel plate and a second electromagnetic steel plate laminated together with the first electromagnetic steel plate in an axial direction of the rotor core, and the second electromagnetic steel plate has a plurality of protrusion portions each extending toward a magnet to be fixed, the method including:
   preparing the first electromagnetic steel plate by punching;
   preparing the second electromagnetic steel plate having the protrusion portion by punching;
   bending and deforming the protrusion portion to have a tip portion extending toward an opposite side of the magnet; and
   laminating the first electromagnetic steel plate and the second electromagnetic steel plate.

Although specific examples according to the present disclosure are described above in detail, these are merely examples and do not limit the scope of the claims. The technology described in the claims includes various modifications and changes of the specific examples illustrated above. The technical elements described in this specification or the drawings exhibit technical usefulness alone or in various combinations, and are not limited to the combinations described in the claims as filed. The techniques exemplified in this specification or drawings can achieve a plurality of purposes at the same time, and achieving one of them has technical utility in itself.

## Claims

1. A rotor core (2) comprising:
a first electromagnetic steel plate (16); and
a second electromagnetic steel plate (18) laminated in an axial direction of the rotor core (2) together with the first electromagnetic steel plate (16), wherein:
the second electromagnetic steel plate (18) has a plurality of protrusion portions (20) each extending toward a magnet (10) to be fixed; and
each of the protrusion portions (20) has a tip portion (26) extending toward an opposite side of the magnet (10).

2. The rotor core (2) according to claim 1, wherein:
each of the protrusion portions (20) has an abutment portion that bends along one side in the axial direction and has a curved surface capable of abutting against the magnet (10); and
the tip portion (26) includes a portion extending from the abutment portion toward the opposite side of the magnet (10).

3. The rotor core (2) according to claim 2, wherein each of the protrusion portions (20) has an extension portion extending from the second electromagnetic steel plate (18) toward the magnet (10) so as to be substantially perpendicular to the axial direction.

4. The rotor core (2) according to claim 3, wherein the tip portion (26) is folded to face the laminated first electromagnetic steel plate (16) and/or the second electromagnetic steel plate (18) with a gap in-between.

5. The rotor core (2) according to claim 1 wherein a magnet slot extending in the axial direction is provided.

6. The rotor core (2) according to claim 5, wherein:
the magnet slot includes a through hole through which an elongated cross-section of the magnet (10) can be arranged along a circumferential direction of the rotor core (2); and
each of the protrusion portions (20) has an extension portion in the magnet slot that extends from the second electromagnetic steel plate (18) toward a long end surface of the magnet (10) on an inner side of the rotor core (2) in a radial direction the rotor core (2) so as to be substantially perpendicular to the axial direction.

7. A rotor comprising:
a rotor core (2); and
a magnet (10) fixed to the rotor core (2), wherein:
the rotor core (2) includes a first electromagnetic steel plate (16) and a second electromagnetic steel plate (18) laminated alongside the first electromagnetic steel plate (16) in an axial direction of the rotor core (2); and
the second electromagnetic steel plate (18) has a plurality of protrusion portions (20) each extending toward the magnet (10) in a fixed state, and each of the protrusion portions (20) has a tip portion (26) extending toward a side opposite to the magnet (10).

8. A manufacturing method of a rotor core (2) where the rotor core (2) includes a first electromagnetic steel plate (16) and a second electromagnetic steel plate (18) laminated alongside the first electromagnetic steel plate (16) in an axial direction of the rotor core (2), and the second electromagnetic steel plate (18) has a plurality of protrusion portions (20) each extending toward a magnet (10) to be fixed, the method comprising:
preparing the first electromagnetic steel plate (16) by punching;
preparing the second electromagnetic steel plate (18) having each of the protrusion portions (20) by punching;
bending and deforming each of the protrusion portions (20) to have a tip portion (26) extending toward an opposite side of the magnet (10); and
laminating the first electromagnetic steel plate (16) and the second electromagnetic steel plate (18).
